# EUROPEAN PATENT SPECIFICATION

(11) **EP 1 386 783 B1**
(45) Date of publication and mention of the grant of the patent: **22.02.2006**
(21) Application number: 03013896.0
(22) Date of filing: 20.06.2003
(51) Int. Cl.: B60R 1/06, G02B 7/182

(54) **Mirror base**
Spiegelhalter
Base pour rétroviseur

(30) Priority: 29.07.2002 JP 2002220008
(43) Date of publication of application: 04.02.2004
(73) Proprietor: Murakami Corporation, Shizuoka-shi, Shizuoka, 422-8569 (JP)
(72) Inventor: Okamoto, Syuuji, c/o Fujieda Works, Murakami Corp., Fujieda-shi, Shizuoka 426-8601 (JP); Aoyama, Kyoji, c/o Fujieda Works , Murakami Corp., Fujieda-shi, Shizuoka 426-8601 (JP)
(74) Representative: Dallmeyer, Georg

(56) References cited:
- EP-A- 0 193 862
- WO-A-00/46072
- US-A- 5 576 086
- US-B1- 6 260 977

## Description

### BACKGROUND OF THE INVENTION

### Field of the Invention

The present invention relates to a mirror base for mounting a mirror body on a car and, more particularly, to a mirror base integrally molded of resin.

### Related Background Art

A mirror body of a car door mirror or the like is generally mounted through a mirror base on a car. The mirror base is normally comprised of a mount piece fixed to a door or the like of a car; and a support piece laterally projecting form the mount piece aside from the car and supporting the mirror base, which are integrally molded of a resin material or a die casting material. In the mount piece of the mirror base integrally molded of the resin material, nut bushes or stud bolts for mounting to the car are fixed to mounting bosses by such means as heating and press fitting in a post-process.

WO 0046072 A describes a vehicle external mirror assembly according to claim 1 comprising a vehicle-to-mirror assembly attachment bracket which is made from a foam. A load transmitting member extends into the attachment bracket and diffuses the applied load into the foam.

US-A-5576086 discloses a moulded article which is formed by a thermoplastic and thermosetting resin and has two planes joining each other in a junction portion.

The EP-A-0193862 describes a vehicle external mirror in which the connecting parts of the mirror body is supported by the supporting parts in a hinged way.

The US-6260977 describes a door mirror stay which has a mount plate which is fixed along a door panel, a mirror support which is supported by the mount plate and which supports a mirror unit, wherein a porpous member is integrally formed with the mount plate, covering a mount surface of the mount plate.

### SUHMARY OF THE INVENTION

The conventional mirror bases as described above had to be integrally molded of the high-rigidity resin or die casting material, in order to secure the flexural strength of the support piece relative to the mount piece. In this case, since the high-rigidity resin materials are generally expensive, there arises a problem of high production cost. The die casting materials have a problem of increase in weight, as compared with the resin materials.

The present invention provides a mirror base that can secure sufficient flexural strength of the support piece relative to the mount piece, without being integrally molded of the high-rigidity resin or die casting material.

A mirror base according to the present invention is a mirror base comprising a mount piece for mounting on a car; and a support piece projecting from the mount piece and adapted to support a mirror body, which are integrally molded of a resin, wherein a reinforcing core member is buried inside across the mount piece and the support piece.

Since the mirror base according to the present invention has the reinforcing core member buried across the mount piece and the support piece, it can secure sufficient flexural strength of the support piece relative to the mount piece. For this reason, the mount piece and support piece do not have to be integrally molded of a high-rigidity resin material, but they can be integrally molded of an inexpensive resin material.

The core member forming the mirror base of the present invention can be comprised of one selected from welded structures of metal, pressed products, and die-cast products, or one selected from high-rigidity resin molding and FRP (Fiber Reinforced Plastics). The core member is preferably provided with a rib for enhancing the flexural rigidity of the support piece relative to the mount piece, because it permits reduction in thickness and weight of the core member.

The core member is preferably provided with a mounting bolt portion or a mounting nut portion bordering a mounting surface of the mount piece, because it obviates the need for the conventionally required post-process of fixing the mounting nut to the mount piece by heating and press fitting.

Furthermore, the core member is preferably comprised of a pressed product in which a continuous flange is formed in a marginal region thereof, because the core member can demonstrate high flexural rigidity while being light in weight.

### BRIEF DESCRIPTION OF THE DRAWINGS

Fig. 1 is a perspective view showing the appearance of the mirror base according to an embodiment of the present invention.
Fig. 2 is a perspective view showing the structure of the core member shown in Fig. 1.
Fig. 3 is an enlarged sectional view of a mounting nut portion shown in Fig. 2.
Fig. 4 is a perspective view showing a first modification example of the core member shown in Fig. 2.
Fig. 5 is a perspective view showing a second modification example of the core member shown in Fig. 2.
Fig. 6 is a perspective view showing a third modification example of the core member shown in Fig. 2.
Fig. 7 is a perspective view showing a fourth modification example of the core member shown in Fig. 2.
Fig. 8 is a perspective view showing a fifth modification example of the core member shown in Fig. 2.
Fig. 9 is a perspective view showing a sixth modification example of the core member shown in Fig. 2.
Fig. 10 is a perspective view of a mount-piece core of the core member shown in Fig. 9, from the outer surface side.
Fig. 11 is a perspective view of a support-piece core of the core member shown in Fig. 9, from the bottom surface side.
Fig. 12 is a sectional view of a mounting nut portion provided in the mount-piece core of the core member shown in Figs. 4, 6, and 7.
Fig. 13 is a sectional view showing a mounting bolt portion as a first modification example of the mounting nut portion shown in Fig. 3.
Fig. 14 is a sectional view showing a mounting bolt portion as a second modification example of the mounting nut portion shown in Fig. 3.
Fig. 15 is a sectional view showing a mounting bolt portion as a third modification example of the mounting nut portion shown in Fig. 3.
Fig. 16 is a sectional view showing a mounting nut portion as a fourth modification example of the mounting nut portion shown in Fig. 3.
Fig. 17 is an exploded perspective view of the mounting nut portion of the fourth modification example shown in Fig. 16.
Fig. 18 is a sectional view showing a mounting bolt portion as a fifth modification example of the mounting nut portion shown in Fig. 3.
Fig. 19 is an exploded perspective view of the mounting bolt portion of the fifth modification example shown in Fig. 18.

### DETAILED DESCRIPTION OF THE PREFERRED EMBODIMENTS

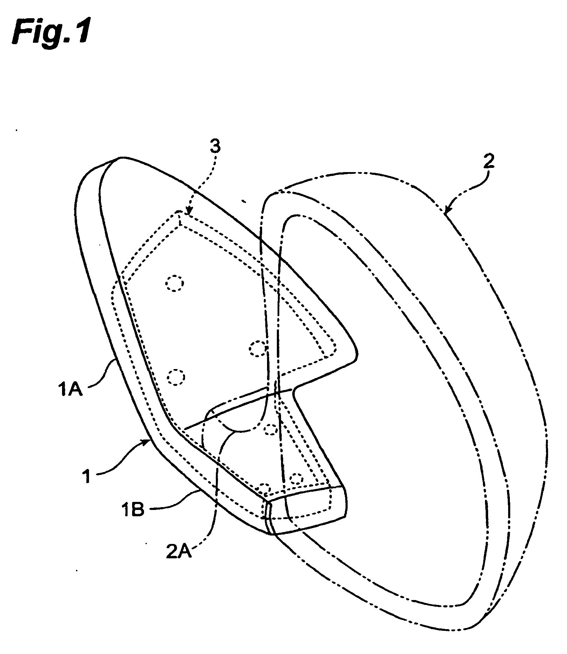

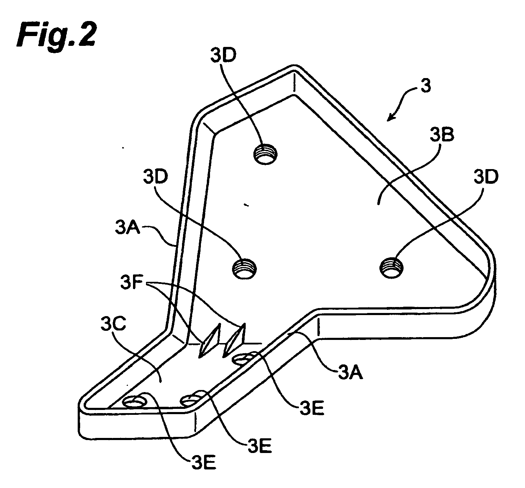

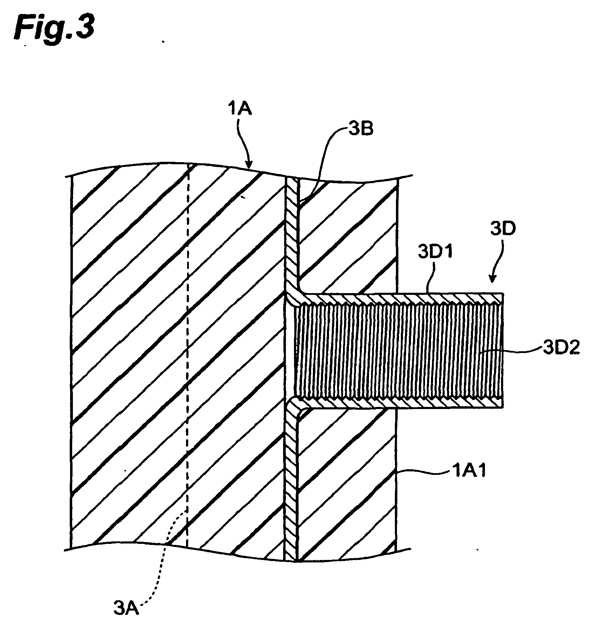

Illustrative embodiments of the mirror base according to the present invention will be described below with reference to the drawings. Among the drawings referred to, Fig. 1 is a perspective view showing the appearance of the mirror base according to an embodiment, Fig. 2 a perspective view showing the structure of the core member shown in Fig. 1, and Fig. 3 an enlarged sectional view of a mounting nut portion shown in Fig. 2.

As shown in Fig. 1, the mirror base in the embodiment is constructed as mirror base 1 of door mirror equipment which is to be mounted on the door part of a car not shown. The mirror base 1 is comprised of a mount piece 1A for mounting on the door part of the car; and a support piece 1B laterally projecting from the mount piece 1A aside the car and adapted to support mirror body 2, which are integrally molded of a resin, and reinforcing core member 3 is buried inside across the mount piece 1A and the support piece 1B.

The mount piece 1A and support piece 1B are integrally molded of an appropriate resin material by insert molding in a state in which the core member 3 is set inside an injection molding mold. The mount piece 1A is a portion to be mounted on an unrepresented gusset plate disposed at the front corner part of the door frame of the car, and is molded in an approximately triangular thick-plate shape corresponding to the shape of the gusset plate. The support piece 1B is formed in a thick-plate shape bent and projecting from the lower part of the rear half of the mount piece 1A, and the angle of flection thereof is approximately 70-90°.

Here the core member 3 is comprised, for example as shown in Fig. 2, of a pressed product of a steel plate in which a continuous flange 3A is formed in a marginal region thereof. This core member 3 is formed as follows: a support-piece core 3C buried in the support piece 1B is bent at the angle of approximately 70-90°, as the support piece 1B was, relative to a mount-piece core 3B buried in the mount piece 1A with a projecting surface of flange 3A inside.

The mount-piece core 3B of the core member 3 is provided, for example, with three mounting nut portions 3D for mounting on the gusset plate with bolts, which project on the exterior surface side. Each mounting nut portion 3D is, as shown in Fig. 3, a portion in which female screw 3D2 is threaded by tapping on the inner periphery of cylinder 3D1 formed by burring and in which the tip part of the nut portion borders a mounting surface 1A1 of the mount piece 1A. Although in the illustrated example the tip part of the mounting nut portion 3D projects out from the mounting surface 1A1, the mounting nut portion 3D may be formed so that the tip face thereof is at almost the same level as the mounting surface 1A1.

On the other hand, as shown in Fig. 2, the support-piece core 3C of the core member 3 is provided with shaft passing holes 3E for interconnection with arm part 2A of the mirror body 2 shown in Fig. 1, which are formed, for example, at three positions. An inflectional portion between the mount-piece core 3B and the support-piece core 3C of the core member 3 is provided, for example, with two beads 3F of an angle cross section projecting on the interior surface side, which are formed as ribs for enhancing the flexural rigidity.

The mirror base 1 of the embodiment constructed as described above is mounted as follows: the mount piece 1A is mounted on the gusset plate of the car by screwing bolts into the three mounting nut portions 3D bordering the mounting surface 1A1 of the mount piece 1A, from the gusset plate side of the car not shown. Then, in this mounted state, the mirror body 2 is supported on the support piece 1B projecting from the mount piece 1A (see Fig. 1).

Here the core member 3 itself, buried across the mount piece 1A and the support piece 1B of the mirror base 1 as shown in Fig. 1, has high flexural rigidity and it demonstrates much higher flexural rigidity thanks to the flange 3A and the beads 3F as ribs shown in Fig. 2. For this reason, the mirror base 1 is reinforced by the core member 3 to secure the sufficient flexural strength of the support piece 1B relative to the mount piece 1A, and the support piece 1B can withstand the load of 30 kgf, for example.

Since in the mirror base 1 of the embodiment the core member 3 is comprised of the pressed product of the steel plate with high flexural rigidity having the flange 3A and beads 3F as ribs, the weight of the mirror base 1 can be reduced by decreasing the thickness of the core member 3.

Since the core member 3 is integrally formed with the mounting nut portions 3D bordering the mounting surface 1A1 of the mount piece 1A, the production process thereof obviates the need for the post-process of fixing the mounting nuts to the mount piece by heating and press fitting as required in the conventional example, whereby the production process can be simplified.

Particularly, in the mirror base 1 of the embodiment, since the core member 3 is buried so as to secure the sufficient flexural rigidity of the support piece 1B relative to the mount piece 1A, the mount piece 1A and the support piece 1B do not have to be integrally molded of the high-rigidity resin material, but they can be integrally molded of an inexpensive, appropriate resin material.

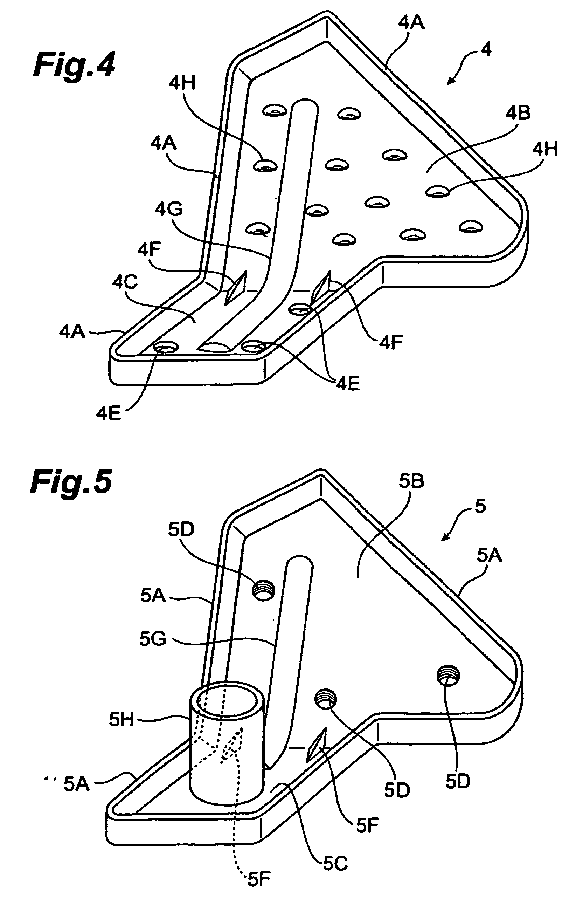

Figs. 4 to 11 show modification examples of the core member 3 forming the mirror base 1 of the embodiment. The core member 4 shown in Fig. 4 is a pressed product in which flange 4A, mount-piece core 4B, support-piece core 4C, shaft passing holes 4E, and beads 4F, which correspond to the flange 3A, mount-piece core 3B, support-piece core 3C, shaft passing holes 3E, and beads 3F of the core member 3 shown in Fig. 2, are integrally formed by pressing.

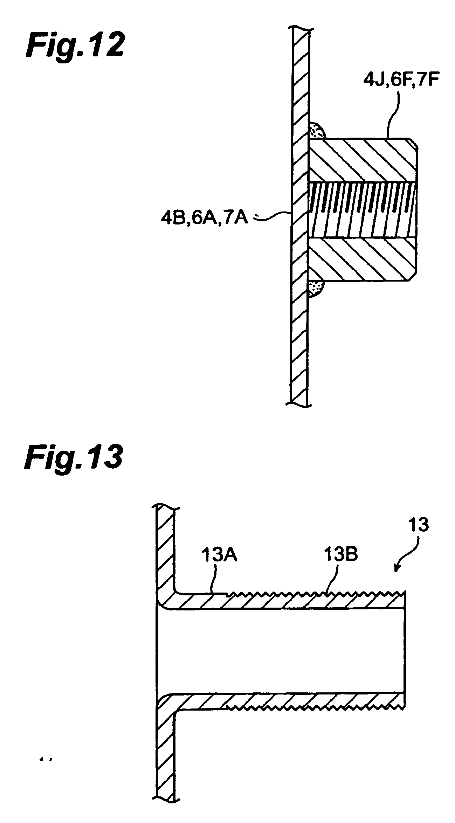

The core member 4 is provided, for example, with a wide, long bead 4G of an arcuate cross section, which is formed as a rib for enhancing the flexural rigidity of the support-piece core 4C relative to the mount-piece core 4B, across the mount-piece core 4B and the support-piece core 4C. The mount-piece core 4B is provided with hemispherically curved, embossed portions 4H for enhancing the flexural rigidity, which project toward the interior. As shown in Fig. 12, nuts 4J, replacing the mounting nut portions 3D shown in Fig. 3, are welded to the outer surface of the mount-piece core 4B.

Since the core member 4 is provided with the large bead 4G and embossed portions 4H (see Fig. 4) in addition to the flange 4A and beads 4F, it can demonstrate much higher flexural rigidity and surely secure the flexural strength of the support-piece core 4C relative to the mount-piece core 4B, whereby it can surely reinforce the mirror base 1, so as to further enhance the flexural strength of the support piece 1B relative to the mount piece 1A.

The core member 5 shown in Fig. 5 is a pressed product in which flange 5A, mount-piece core 5B, support-piece core 5C, mounting nut portions 5D, and beads 5F, which correspond to the flange 3A, mount-piece core 3B, support-piece core 3C, mounting nut portions 3D, and beads 3F of the core member 3 shown in Fig. 2, are integrally formed by pressing.

The core member 5 is provided with a bead 5G similar to the bead 4G shown in Fig. 4, and the bead 5G is formed as a rib for enhancing the flexural rigidity of the support-piece core 5C relative to the mount-piece core 5B, across the mount-piece core 5B and the support-piece core 5C. The support-piece core 5C is provided with a shaft portion 5H, which replaces the shafts to be inserted into the shaft passing holes 3E shown in Fig. 2. The shaft portion 5H is of a large-diameter cylinder shape projecting upward from the inner surface of the support-piece core 5C. The shaft portion 5H may also be constructed by inserting a cylindrical shaft of a separate part into a large-diameter shaft passing hole bored in the support-piece core 5C.

This core member 5 can also demonstrate high flexural rigidity thanks to the flange 5A, beads 5F, and bead 5G and secure sufficient flexural strength of the support-piece core 5C relative to the mount-piece core 5B, whereby it can reinforce the mirror base 1, so as to secure the sufficient flexural strength of the support piece 1B relative to the mount piece 1A.

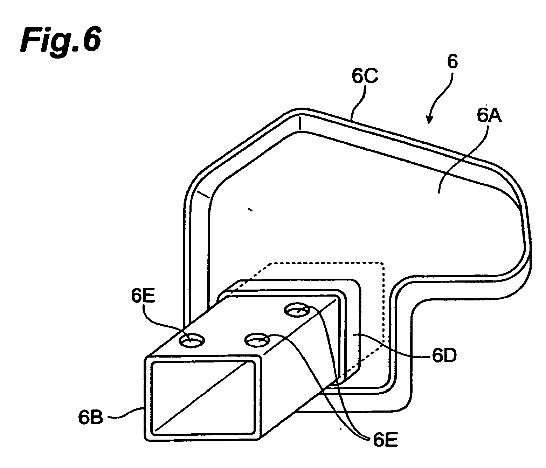

The core member 6 shown in Fig. 6 is comprised of two parts: mount-piece core 6A buried in the mount piece 1A (see Fig. 1); and support-piece core 6B buried in the support piece 1B (see Fig. 1). The mount-piece core 6A is a pressed product of a steel plate in which a continuous flange 6C is formed in the marginal region thereof, and the support-piece core 6B is made of a short, rectangular steel pipe.

The support-piece core 6B is fitted in flange 6D along the peripheral edge of an aperture formed in the lower part of the mount-piece core 6A, and projects out on the inner surface side of the mount-piece core 6A where the flange 6C projects. Shaft passing holes 6E, similar to those 3E shown in Fig. 2, are formed through and in an upper surface of the support-piece core 6B. Nuts 6F, similar to those 4J, are welded to the outer surface of the mount-piece core 6A on the other side than the flange 6C side, as shown in Fig. 12.

Since this core member 6 is of the structure in which the support-piece core 6B of the rectangular steel pipe with high rigidity is fitted in the flange 6D of the mount-piece core 6A so as to secure the sufficient flexural strength of the support-piece core 6B relative to the mount-piece core 6A, it can reinforce the mirror base 1, so as to secure the sufficient flexural strength of the support piece 1B relative to the mount piece 1A.

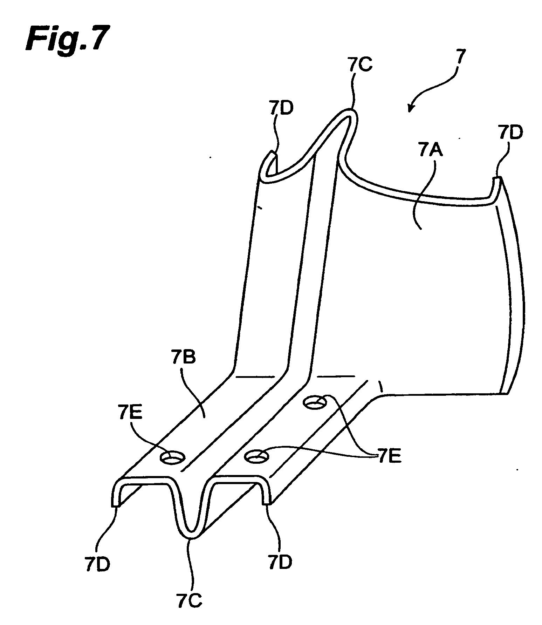

The core member 7 shown in Fig. 7 is comprised of a pressed product of a steel plate, in which the support-piece core 7B buried in the support piece 1B (see Fig. 1) is bent at the angle of approximately 70-90° relative to the mount-piece core 7A buried in the mount piece 1A (see Fig. 1). This core member 7 is provided with a bead 7C extending longitudinally across the mount-piece core 7A and the support-piece core 7B, as a rib for securing the flexural rigidity of the support-piece core 7B relative to the mount-piece core 7A. This bead 7C projects out on the outer surface side of the mount-piece core 7A and support-piece core 7B and, for example, in a horseshoe sectional shape so as to form a trench on the inner surface side of the mount-piece core 7A and support-piece core 7B, and it demonstrates extremely high flexural rigidity against the load acting from the top on the support-piece core 7B.

Flanges 7D, projecting in the same direction as the bead 7C, are integrally formed in the portions other than the upper edge of the mount-piece core 7A and the projection end of the support-piece core 7B in the core member 7. Shaft passing holes 7E, similar to those 3E shown in Fig. 2, are formed through and in the support-piece core 7B. Nuts 7F similar to those 4J are welded to the outer surface of the mount-piece core 7A, as shown in Fig. 12.

Since the bead 7C demonstrates the extremely high flexural rigidity against the load acting from the top on the support-piece core 7B and the flanges 7D also demonstrate some flexural rigidity in collaboration therewith, the core member 7 can secure the sufficient flexural strength of the support-piece core 7B relative to the mount-piece core 7A and surely reinforce the mirror base 1, so as to secure the sufficient flexural strength of the support piece 1B relative to the mount piece 1A.

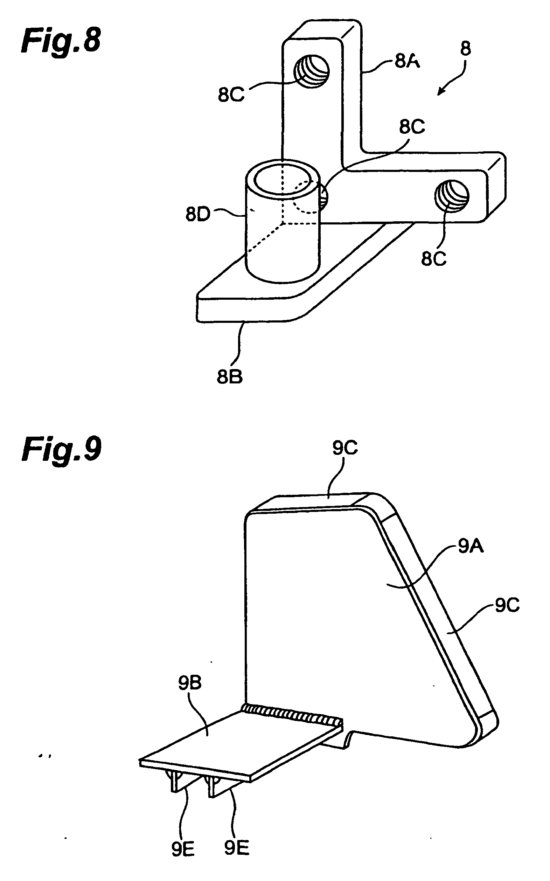

The core member 8 shown in Fig. 8 is a die-cast product, an injection-molded product of a high-rigidity resin, or an FRP product in which the mount-piece core 8A buried in the mount piece 1A (see Fig. 1) and the support-piece core 8B buried in the support piece 1B (see Fig. 1) are integrally formed. The mount-piece core 8A is formed in an L-shaped thick block shape and the support-piece core 8B in a thick plate shape. This support-piece core 8B projects at the angle of approximately 70-90° from the lower part near the crook of the mount-piece core 8A.

Screw holes 8C as mounting nut portions are formed at three positions in the both-end and middle crook regions of the mount-piece core 8A. A cylindrical shaft portion 8D with a large diameter, which replaces the shafts to be inserted into the shaft passing holes 3E shown in Fig. 2, projects out on the upper surface of the support-piece core 8B.

Since the mount-piece core 8A and support-piece core 8B are integrally molded in the thick shape, the core member 8 can demonstrate high flexural rigidity and secure the sufficient flexural strength of the support-piece core 8B relative to the mount-piece core 8A, whereby it can reinforce the mirror base 1, so as to secure the sufficient flexural strength of the support piece 1B relative to the mount piece 1A.

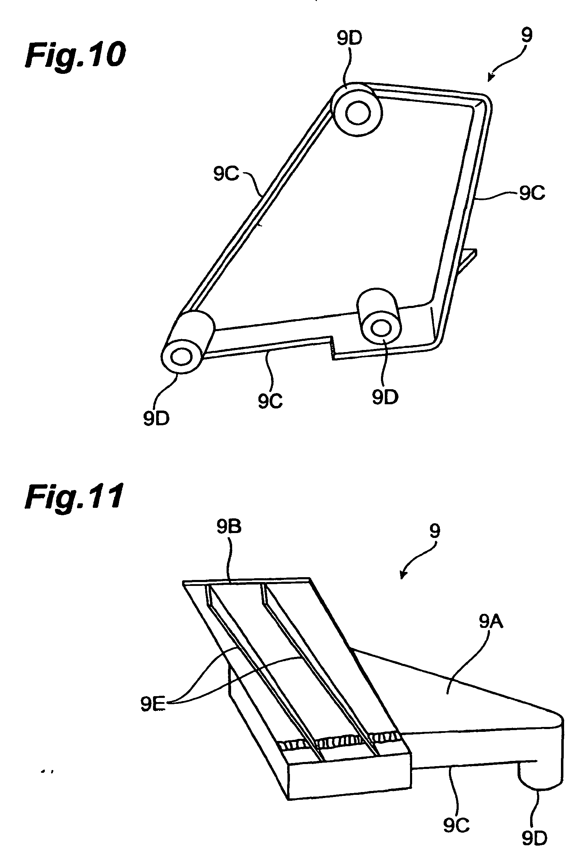

The core member 9 shown in Figs. 9-11 is a welded structure of a metal plate, in which the support-piece core 9B buried in the support piece 1B (see Fig. 1) is welded so as to project at the angle of approximately 70-90°, to the lower part of the rear half of the mount-piece core 9A buried in the mount piece 1A (see Fig. 1). As shown in Fig. 10, flanges 9C for enhancing flexural rigidity are welded so as to project on the outer surface side, to the marginal region of the mount-piece core 9A. Three nut members 9D forming the mounting nut portions are welded to the outer surface of the mount-piece core 9A. The flanges 9C are welded so as to be continuous through the nut members 9D.

Ribs 9E, 9E for securing the flexural rigidity of the support-piece core 9B relative to the mount-piece core 9A are welded to the bottom surface of the support-piece core 9B, as shown in Fig. 11. The ribs 9E, 9E extend along the projecting direction of the support-piece core 9B and their base ends are welded to the lower part of the inner surface of the mount-piece core 9A while butting against it.

Since this core member 9 can demonstrate high flexural rigidity thanks to the flanges 9C and ribs 9E, 9E and secure sufficient flexural strength of the support-piece core 8B relative to the mount-piece core 8A, it can reinforce the mirror base 1, so as to secure the sufficient flexural strength of the support piece 1B relative to the mount piece 1A.

The mirror base according to the present invention is not limited to the embodiments described above. For example, the mounting nut portions 3D of the mount-piece core 3B shown in Fig. 3 can be changed into the mounting bolt portions or mounting nut portions as shown in Figs. 13-19.

The mounting bolt portion 13 shown in Fig. 13 is a portion in which a male screw 13B is threaded on the outer periphery of cylinder 13A formed by burring. This mounting bolt portion 13 is set through the gusset plate of the car not shown, and a nut is screwed onto the tip part of the bolt portion, whereby the mount piece 1A of the mirror base 1 is mounted on the gusset plate as shown in Fig. 1.

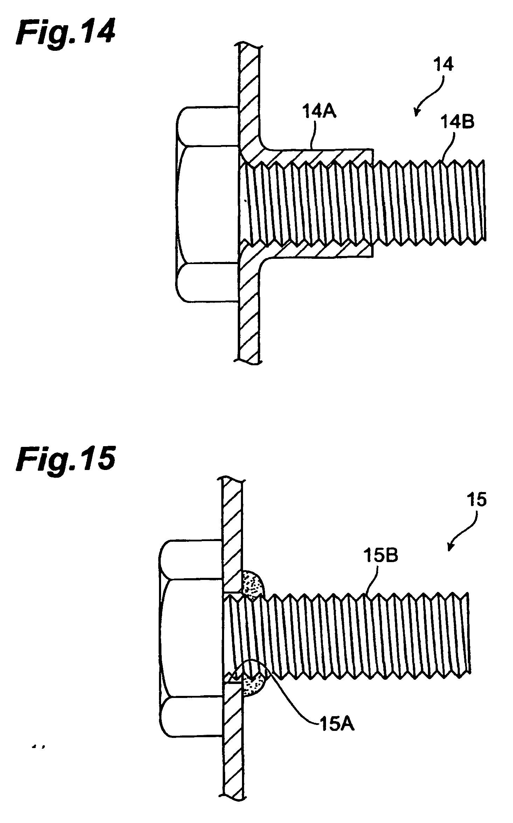

The mounting bolt portion 14 shown in Fig. 14 is a portion in which a bolt 14B is screwed from the inner surface side of the mount-piece core into a mounting nut 14A, similar to the mounting nut portion 3D shown in Fig. 3, so that the tip of bolt 14B projects out from the mounting nut 14A.

The mounting bolt portion 15 shown in Fig. 15 is a portion in which a bolt 15B is inserted from the inner surface side of the mount-piece core into a bolt passing hole 15A bored in the mount-piece core and is welded to the outer surface of the mount-piece core.

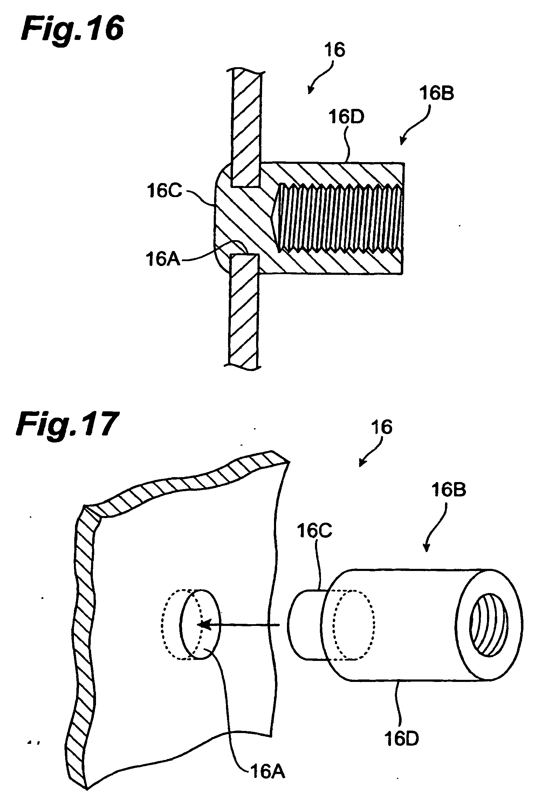

The mounting nut portion 16 shown in Figs. 16 and 17 is a portion in which a rivet portion 16C of rivet nut 16B is inserted from the outer surface side of the mount-piece core into a fitting hole 16A bored in the mount-piece core and in which the tip of the rivet portion 16C is caulked on the inner surface side of the mount-piece core and around the fitting hole 16A, thereby fixing the nut portion 16D of rivet nut 16B to the outer surface of the mount-piece core.

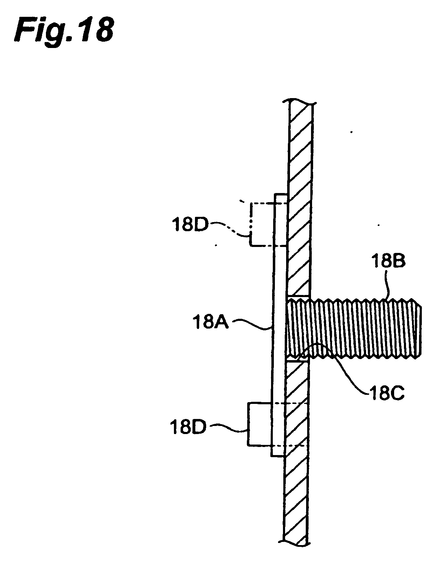

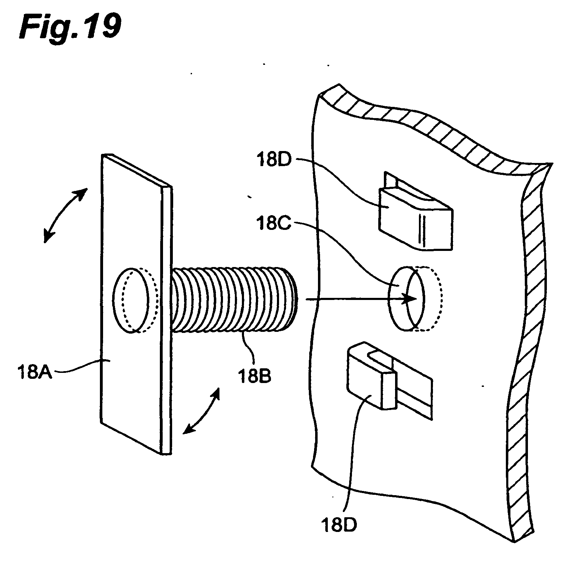

The mounting bolt portion 18 shown in Figs. 18 and 19 is a portion in which a screw member 18B with an engaging piece 18A being welded to one end thereof is inserted from the inner surface side of the mount-piece core into a through hole 18C bored in the mount-piece core and in which the engaging piece 18A is engaged with a pair of catching pieces 18D, 18D formed by lancing and bending on the inner surface side of the mount-piece core. The pair of catching pieces 18D, 18D are arranged in point symmetry with respect to the center of the through hole 18C so as to permit the engaging piece 18A to be rotated for mounting or dismounting.

Since the mirror base according to the present invention secures the sufficient flexural strength of the support piece relative to the mount piece thanks to the reinforcing core member inserted across the mount piece and the support piece, the mount piece and support piece do not have to be integrally molded of the high-rigidity resin or die casting material, and they can be integrally molded of a lightweight, inexpensive resin material.

## Claims

1. A mirror base (1) comprising a mount piece (1A) for mounting on a car; a support piece (1B) projecting from the mount piece (1A) and adapted to support a mirror body (2), the mount piece (1A) and the support piece (1B) being integrally molded of a resin; and a reinforcing core member (3, 4, 5, 6, 7, 8, 9)
**characterized in that**
the core member (3, 4, 5, 6, 7, 8, 9) is buried inside across the mount piece (1A) and the support piece (1B) and comprises a continuous flange (3A, 4A, 5A, 6C, 7D, 9C) formed in a marginal region thereof.

2. The mirror base according to Claim 1, wherein the core member (3, 4, 5, 6, 7, 8, 9) is provided with a rib (3F, 4F, 4G, 5F, 5G, 7C, 9E) for enhancing flexural rigidity of the support piece (1B) relative to the mount piece (1A).

3. The mirror base according to Claim 1 or 2, wherein the core member (3, 4, 5, 6, 7, 8, 9) is provided with a mounting portion (3D, 4J, 5D, 6F, 7F, 8C, 9D, 13, 14, 15, 16, 18) bordering a mounting surface (1A1) of the mount piece (1A) to be mounted on the car.

4. The mirror base according to Claim 3, wherein said mounting portion (3D, 4J, 5D, 6F, 7F, 8C, 9D, 13, 16) is a mounting nut portion.

5. The mirror base according to Claim 3, wherein said mounting portion (14, 15, 18) is a mounting bolt portion.

6. The mirror base according to one of Claims 1 to 5, wherein said core member (3, 4, 5, 6, 7, 8, 9) is comprised of a pressed product.

## Revendications

1. Base de rétroviseur (1) comprenant une pièce de montage (1A) destinée au montage sur une automobile ; une pièce de support (1B) s'étendant depuis la pièce de montage (1A) et destinée à supporter un corps de rétroviseur (2), la pièce de montage (1A) et la pièce de support (1B) étant moulée en venue de matière dans une résine ; et un élément central de renforcement (3, 4, 5, 6, 7, 8, 9)
**caractérisée en ce que** :
l'élément central (3, 4, 5, 6, 7, 8, 9) est enfoui à l'intérieur de la pièce de montage (1A) et de la pièce de support (1B) et comprend un rebord continu (3A, 4A, 5A, 6C, 7D, 9C) formé dans une région marginale de celui-ci.

2. Base de rétroviseur selon la revendication 1, dans laquelle l'élément central (3, 4, 5, 6, 7, 8, 9) est doté d'une nervure (3F, 4F, 4G, 5F, 5G, 7C, 9E) destinée à améliorer la rigidité en flexion de la pièce de support (1B) par rapport à la pièce de montage (1A).

3. Base de rétroviseur selon la revendication 1 ou 2, dans laquelle l'élément central (3, 4, 5, 6, 7, 8, 9) est doté d'une portion de montage (3D, 4J, 5D, 6F, 7F, 8C, 9D, 13, 14, 15, 16, 18) bordant une surface de montage (1A1) de la pièce de montage (1A) à monter sur l'automobile.

4. Base de rétroviseur selon la revendication 3, dans laquelle ladite portion de montage (3D, 4J, 5D, 6F, 7F, 8C, 9D, 13, 16) est une portion de gorge de montage.

5. Base de rétroviseur selon la revendication 3, dans laquelle ladite portion de montage (14, 15, 18) est une portion de boulon de montage.

6. Base de rétroviseur selon l'une des revendications 1 à 5, dans laquelle ledit élément central (3, 4, 5, 6, 7, 8, 9) est constitué d'un produit pressé.

## Patentansprüche

1. Spiegelfassung (1) mit einem Befestigungselement (1A) zum Befestigen an einem Auto; einem Halteelement (1B), das von dem Befestigungselement (1A) vorsteht und zum Halten eines Spiegelkörpers (2) vorgesehen ist, wobei das Befestigungselement (1A) und das Halteelement (1B) einstückig aus Harz gefertigt sind; und einem Verstärkungskernelement (3,4,5,6,7,8,9)
**dadurch gekennzeichnet, dass**
das Kernelement (3,4,5,6,7,8,9) innerhalb des Befestigungselements (1A) und des Halteelements (1B) und über diese verlaufend verdeckt angeordnet ist und einen durchgehenden Flansch (3A,4A,5A,6C,7D,9C) aufweist, der in einem Randbereich ausgebildet ist.

2. Spiegelfassung nach Anspruch 1, bei dem das Kernelement (3,4,5,6,7, 8,9) eine Rippe (3F,4F,4G,5F,5G,7C,9E) zum Verstärken der Biegesteifigkeit des Halteelements (1B) relativ zu dem Befestigungselement (1A) aufweist.

3. Spiegelfassung nach Anspruch 1 oder 2, bei dem das Kernelement (3,4, 5,6,7,8,9) einen Befestigungsteil (3D,4J,5D,6F,7F,8C,9D,13,14,15,16, 18) aufweist, der zum Befestigen an dem Auto an eine Befestigungsfläche (1A1) des Befestigungselements (1A) angrenzt.

4. Spiegelfassung nach Anspruch 3, bei dem der Befestigungsteil (3D,4J, 5D,6F,7F,8C,9D,13,16) ein Befestigungsmutternteil ist.

5. Spiegelfassung nach Anspruch 3, bei dem der Befestigungsteil (14,15, 18) ein Befestigungsschraubenteil ist.

6. Spiegelfassung nach einem der Ansprüche 1 bis 5, bei dem das Kernelement (3,4,5,6,7,8,9) aus einem Pressprodukt gebildet ist.
